# EUROPEAN PATENT APPLICATION

(11) **EP 4 664 409 A1**
(43) Date of publication of application: **17.12.2025**
(21) Application number: 25181843.1
(22) Date of filing: 10.06.2025
(51) Int. Cl.: G06T 15/06

(54) **SYSTEM AND METHOD FOR RENDERING GRAPHICS DATA**

(30) Priority: 11.06.2024 GB 202408362
(71) Applicant: Sony Interactive Entertainment Inc., Tokyo 108-0075 (JP)
(72) Inventor: CONNOR, Patrick John, London, W1F 7LP (GB); CLEMO, Graham David, London, W1F 7LP (GB)
(74) Representative: Gill Jennings & Every LLP

(57) **Abstract**

A computer implemented method for rendering graphics data of a 3D scene on a video gaming system comprising a GPU, the method comprising: obtaining lightmap data of the 3D scene; identifying a plurality of scene wavelengths based on the lightmap data, wherein the plurality of scene wavelengths are wavelengths that meet a threshold contribution to the 3D scene; and rendering the scene based on the plurality of scene wavelengths.

## Description

### FIELD OF THE INVENTION

The present invention is in the field of video gaming systems and relates to systems and methods for rendering graphics data.

### BACKGROUND

Ray-traced spectral rendering is a technique used in computer graphics to simulate the interaction of a spectrum of light wavelengths (e.g., a spectrum of visible light wavelengths) with surfaces and materials in a scene. Ray-traced spectral rendering uses algorithms that simulate real-world physical phenomena to accurately simulate how light is absorbed, transmitted, and/or scattered by different materials at different wavelengths.

By simulating the interaction of a spectrum of wavelengths, ray-traced spectral rendering can provide an improvement over traditional rendering techniques, which often simplify the behavior of light, treating it as a single entity or as having only a few discrete colors (e.g., red, blue, and green). This is because light in the real world comprises a continuous spectrum of wavelengths, and different materials interact with light in complex ways depending on the wavelength of light.

Ray-traced spectral rendering can allow for more realistic rendering of effects such as dispersion (the separation of light into its component colors), subsurface scattering (the diffusion of light through translucent materials), and spectral reflection and refraction (the bending of light as it passes through different mediums). Thus, ray-traced spectral rendering can produce more realistic images when compared to traditional rendering techniques.

However, ray-traced spectral rendering is computationally intensive and requires significant processing power. This is due, in part, to ray-traced spectral rendering involving tracing each ray at multiple wavelengths, which significantly increases the computational workload compared to traditional rendering techniques that consider only a single wavelength. Some algorithms comprise wavelength multiplexing techniques such that each ray comprises multiple wavelengths of light, but these techniques are still computationally expensive.

There is accordingly a need for a method that overcomes these issues and facilitates ray-traced spectral rendering at a reduced computational intensity.

### SUMMARY OF INVENTION

In a first aspect of the invention there is provided a computer implemented method for rendering graphics data of a 3D scene on a video gaming system comprising a GPU, the method comprising: obtaining lightmap data of the scene; identifying a plurality of scene wavelengths based on the lightmap data, wherein the plurality of scene wavelengths are wavelengths that meet a threshold contribution to the scene; and rendering the scene using the plurality of scene wavelengths.

The lightmap data may be a data structure, for example a two-dimensional data structure, having elements that are mappable to a location on a surface in the 3D scene. For example, the surface may be a surface of an object in the scene having a corresponding material. In this context, each element of the lightmap data may map to a respective area of a surface. The way in which each element is mapped may depend on a shape of the surface. For example, elements may map differently to a curved surface than to a flat surface. The lightmap data may comprise information that describes lighting conditions for the surface to which the lightmap data is mappable. This information may include: spectral data indicative of an amount of light (e.g., an intensity) of each wavelength present in a particular direction in a scene; wavelength distribution data indicative of an intensity variation across a spectrum of wavelengths; material properties indicative of how light interacts with different materials (e.g., reflectance, transmittance, and absorption properties); and light source location data indicative of locations of one or more light sources in the scene. This information may also include polarisation data indicative of a polarisation of each ray. Lightmap data typically provides an improved runtime performance because the underlying hardware system does not have to perform lighting calculations during runtime. The term "runtime" may be understood as a period of time in which the GPU is actively generating a visual output.

The "scene wavelengths" may be understood as a subset of wavelengths from a wavelength spectrum that meet a threshold amount of interaction with materials of the objects present in the 3D scene. This interaction may be a particular type of interaction, such as a reflection interaction. Thus, the scene wavelengths may be wavelengths that provide a greater contribution to the overall "look" of the scene. For example, a red object in a scene may reflect red wavelengths more than blue or green wavelengths. Therefore, red wavelengths (e.g., 620 nm to 750 nm) may contribute more to the look of the scene because, during generation of the lightmap data, more red wavelengths rays through the pixels are reflected off the object and reach at least one light source.

In this way, the method of the invention may improve performance when rendering the scene at runtime. In particular, the scene may be rendered using the plurality of scene wavelengths that meet the threshold contribution to the 3D scene. Thus, the video gaming system may use only these scene wavelengths, and can discard wavelengths other than the scene wavelength, thus reducing an overall amount of data required to render the scene.

Preferably, identifying the plurality of scene wavelengths comprises: applying a Fourier transform to the lightmap data to obtain a plurality of frequencies; and determining the plurality of wavelengths based on the plurality of frequencies. Since the lightmap data includes lightmap pixel data representing spectral data comprising intensities at various wavelengths or frequencies, applying a Fourier transform decomposes the lightmap pixel data into its constituent frequencies. A predetermined filter can be applied to these constituent frequencies. The predetermined filter can be an intensity filter, such that frequencies that meet the intensity threshold are identified as scene wavelengths. Further means for identifying scene wavelength based on the constituent frequencies may be envisaged. In this way, the plurality of scene wavelengths can be obtained using a computationally inexpensive data processing step. Advantageously, efficiency of the graphics rendering pipeline may be further improved.

Preferably, rendering the scene using the plurality of scene wavelengths comprises: performing ray tracing using the plurality of scene wavelengths. In this way, the method of the invention may provide a technical improvement over existing ray-traced spectral rendering techniques which simulate the interaction of a full spectrum of wavelengths (e.g., a full spectrum of visible light wavelengths). In particular, the method of the invention may utilise a subset of wavelengths of the spectrum of wavelengths. Furthermore, this subset of wavelengths may consist of wavelengths that meet the threshold contribution to the scene and as such, a reduction in quality of the rendered scene may be minimised. In particular, wavelengths that do not meet the threshold contribution may not be used in the ray tracing step. Since these wavelengths do not contribute as much to the overall look of the scene, the absence of these wavelengths may have a minimal impact on the look of the scene. Overall, system performance may be improved with minimal reduction in quality of the rendered scene.

The method may therefore provide a means for rendering graphics data using ray-traced spectral rendering at a reduced computational cost. In particular, the method may utilise one or more wavelengths required by the scene, rather than random wavelengths across the full spectrum. Consequently, fewer wavelengths may be used and by extension, fewer rays may be traced to render a scene. Thus, fewer calculations are required to render the scene.

In some embodiments, performing ray tracing using the plurality of scene wavelengths comprises: wavelength multiplexing the plurality of scene wavelengths. Wavelength multiplexing the plurality of scene wavelengths may comprise multiplexing subsets of the plurality of scene wavelengths into respective rays. In this way, when compared to existing wavelength multiplexing ray tracing techniques, wavelength multiplexing may be performed with wavelengths that actually contribute to the scene, rather than a random selection of wavelengths. Advantageously, computing capacity that may have otherwise been used on unnecessary wavelengths can be assigned to wavelengths relevant to the scene.

Preferably, the lightmap data comprises spectral interaction data; and identifying the plurality of scene wavelengths is based on the spectral interaction data. The term "spectral interaction data" may be understood as data present in the lightmap data that represents how different wavelengths combine to produce a final colour of respective viewing portions (e.g., pixels).

Preferably, the threshold contribution is an interaction threshold. The term "interaction threshold" may be understood as a threshold associated with how much a particular wavelength (i.e., a ray of that wavelength) interacts with the scene. In this way, the interaction threshold may provide a means for deterministically identifying scene wavelengths.

In some embodiments, the interaction threshold is quantified as a number of reflections the ray of that wavelength experiences when intersecting different object surfaces of the scene. The reflections may be a primary reflection (i.e., the ray intersects only one surface and is reflected to a light source) and/or a secondary reflection (i.e., the ray intersects more than one surface before being reflected to a light source). The threshold interaction threshold may be at least one reflection. In this way, wavelengths that are absorbed by a material (i.e., are not reflected) may not meet the interaction threshold and by extension, may not be identified as a scene wavelength. For example, a red wavelength (e.g., 620 to 750 nm) may be reflected by an object and may be identified as a scene wavelength, whilst a blue wavelength (e.g., 450 to 495 nm) may be absorbed by the object and may not be identified as a scene wavelength. Advantageously, the scene may be rendered using wavelengths that contribute to the look of the scene.

In some embodiments, the interaction threshold is quantified as an intensity threshold. The intensity threshold may be a predetermined intensity value. The intensity threshold may relate to how much a wavelength is reflected by an object (i.e., an intensity of the wavelength). For example, a red object may reflect red wavelengths (e.g., 620 nm to 750 nm) more than blue wavelengths (450 to 495 nm), such that an intensity of reflected red wavelengths is greater than the intensity of reflected blue wavelengths. The intensity threshold may be selected such that the intensity of reflected blue wavelengths does not meet the threshold.

In this way, wavelengths that meet a threshold intensity may be identified as scene wavelengths and may be subsequently used to render the scene. Advantageously, the number of wavelengths used may be reduced and a number of calculations required to render the scene is reduced, thereby saving computational resources.

In some embodiments, the method further comprises modifying the lightmap data based on the plurality of scene wavelengths. In some embodiments, modifying the lightmap data comprises removing data corresponding to wavelengths that do not meet the threshold contribution to the scene. In this way, a volume of data associated with the lightmap data can be reduced. Advantageously, memory (e.g., GPU memory) requirements may be reduced.

Preferably, the lightmap data is obtained prior to runtime. In this way, the lightmap data may be uploaded to a dedicated memory (e.g., video random access memory (VRAM)) associated with the GPU prior to runtime. Advantageously, runtime performance may be improved because a portion of runtime performance is not spent on obtaining the lightmap data.

In some embodiments, the plurality of scene wavelengths are identified prior to runtime. For example, the plurality of scene wavelengths can be identified based on the lightmap data. Wavelengths that are not scene wavelengths can be removed from the lightmap data, thereby reducing the amount of data required to store the lightmap without significantly affecting the quality of the lightmap. These wavelengths that are not scene wavelengths can be removed by applying a filter to the constituent frequencies after a Fourier transform is applied to the spectral data. This filter may be an intensity filter, such that frequencies that do not meet the intensity filter are removed from the lightmap data.

Alternatively, the scene wavelengths are identified at runtime. In this way, the scene wavelengths may be identified prior to the video gaming system executing and rendering the scene. During the spectral rendering step, only scene wavelengths may be used. Advantageously, runtime performance may be improved because processing is only required for the plurality of scene wavelengths.

In another aspect of the invention, there is provided a non-transitory storage medium comprising instructions that when executed by a processor cause the processor to perform the method of the first aspect. The processor may comprise a central processing unit (CPU) and graphics processing unit (GPU).

In another aspect of the invention, there is provided a computer program comprising instructions that when executed by a processor cause the processor to perform the method of the first aspect. The processor may comprise a central processing unit (CPU) and graphics processing unit (GPU).

In another aspect of the invention, there is provided a video game system for rendering graphics data of a 3D scene, the system comprising a processor and a GPU and being configured to: obtain lightmap data of the scene; identify a plurality of scene wavelengths based on the lightmap data, wherein the plurality of scene wavelengths are wavelengths that meet a threshold contribution to the scene; and render the scene using the plurality of scene wavelengths.

The video game system may be further configured to carry out one or more further steps of the steps of the method of the first aspect.

### BRIEF DESCRIPTION OF DRAWINGS

Figure 1 illustrates a video gaming system according to the present invention; and
Figure 2 illustrates a method flow diagram of a method according to the present invention.

### DETAILED DESCRIPTION

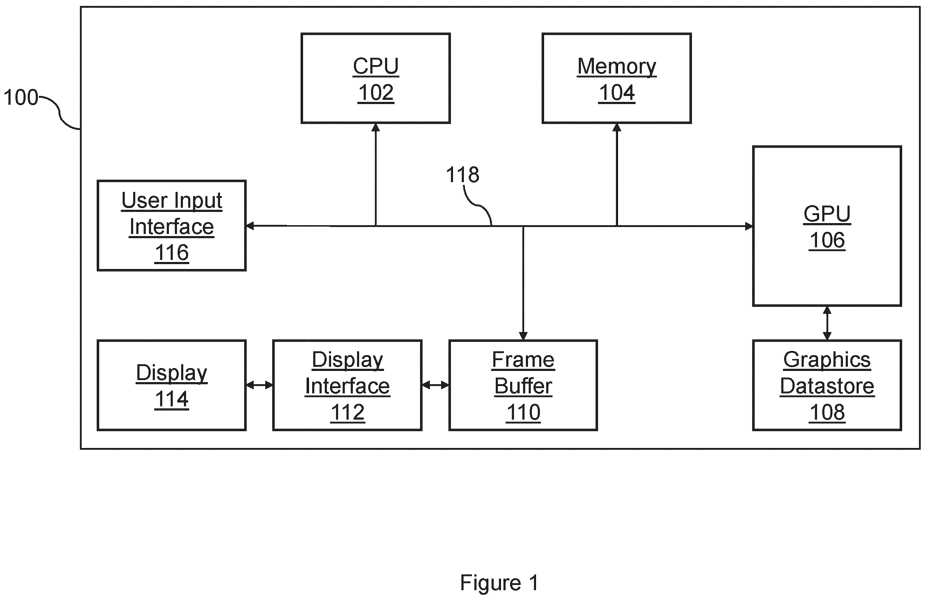

Figure 1 illustrates a video gaming system 100 configured to implement methods disclosed herein.

The system 100 comprises a central processing unit (CPU) 102; a memory 104; a graphics processing unit (GPU) 106; a graphics datastore 108; a frame buffer 110; a display interface 112; and a display 114. The system 100 further comprises a system bus 118 arranged to communicatively couple the CPU 102; the memory 104; the GPU 106; and the frame buffer 110. The system 100 may further comprise other components typical to a video gaming system, such as a user input interface 116.

The CPU 102 is arranged to control operation of the system 100. For example, the CPU 102 is arranged to load instructions stored on the memory 104 in order to cause the CPU 102 to perform the methods disclosed herein. The memory 104 may include one or more volatile or non-volatile storage devices, such as random-access memory (RAM), dynamic RAM (DRAM), and/or any other suitable storage medium comprising instructions that when executed by the CPU 102, cause the CPU 102 to perform the method steps disclosed herein. The memory 104 comprises one or more graphics rendering instructions that instruct the CPU 102 to cause the rendering of graphics data to the display 114.

The GPU 106 is arranged to be controlled by the CPU 102. For example, the CPU 102 comprises a GPU driver (not shown) for controlling operation of the GPU 106 to facilitate execution of the methods disclosed herein. To process the graphics rendering instructions, the CPU 102 controls the GPU to perform the rendering of graphics data. These graphics rendering instructions conform to a graphics application programming interface (API) such that the GPU can efficiently implement graphics rendering steps. The GPU 106 comprises a GPU memory (not shown) arranged to store visual data such as textures, geometry, and other graphical assets. The GPU memory includes, for example, video random access memory (VRAM).

The GPU 106 is coupled to the graphics datastore 108 (for example via a bus (not shown)) such that the GPU 106 can read and write data to the graphics datastore 108. The graphics datastore 108 may include one or more volatile or non-volatile storage devices, such as random-access memory (RAM), dynamic RAM (DRAM), and/or any other suitable storage medium. The graphics datastore 108 is arranged to store lightmap data for a 3D scene.

The lightmap data is generated by known ray tracing lightmap data generation means. For example, 3D scene data is obtained. The scene data comprises data representative of scene geometry (i.e., object shapes, positions, and materials), light sources in the scene (i.e., location and characteristics such as colour), surface textures defined by the scene geometry, and a camera point of view (i.e., a set of pixels representing the camera point of view). The scene data also includes spectral properties (for example, reflectance, transmittance, and spectral emission) associated with the object materials. These spectral properties are configured to describe how the object materials interact (e.g., reflect or transmit) with different wavelengths.

Pre-baked lighting for the scene can be generated by generating rays from the camera point of view through each pixel. A plurality of rays can be generated through each pixel, each ray having a discrete wavelength, preferably such that a spectrum of visible wavelengths is generated through each pixel. Intersections (i.e., where a ray hits an object) between each ray and the scene geometry are determined by simulating the path of each ray. At each intersection, new rays can be generated according to the well-known Monte Carlo method, such that each new ray propagates along a random direction after the original ray interacts with the object. Each new ray can itself intersect the scene geometry (i.e., interact with an object) to generate further new rays. Each ray is recursively reflected until it reaches a light source. A depth limit or radiance threshold can be set to prevent infinite computations. Each ray accumulates colour information as it interacts with objects in the scene, the colour information being dependent on absorption and scattering properties of the object material. Once a ray has reached the light source, or the threshold has been met, the colour data of that ray is accumulated with a plurality of other rays that have the same pixel as origin. That is, the colour data of all rays that are traced from a particular pixel are accumulated. The properties of the light source (e.g., the spectral power distribution) influence the colour data of these rays, such that the intensity of each wavelength is dependent on the light source that the ray reaches. The number of reflections that a ray undergoes, and the spectral properties of each object material that reflects the ray also contribute to the colour data of the rays.

For each pixel, contributions of wavelengths across the whole spectrum used are accumulated to determine a lightmap pixel data represented as spectral data comprising intensities at various wavelengths or frequencies. The whole set of lightmap pixel data is stored in the graphics datastore 108 as the lightmap data. It will be appreciated that one or more further processing steps may be performed, such as anti-aliasing and other optimisation steps.

In summary, the lightmap data comprises: spectral data indicative of an amount of light of each wavelength present in a particular direction in a scene; wavelength distribution data indicative of an intensity variation across a spectrum of wavelengths; material properties indicative of how light interacts with different materials (e.g., reflectance, transmittance, and absorption properties); and light source location data indicative of locations of one or more light sources in the scene.

The frame buffer 110 is arranged to receive rendered image data from the CPU 102 and/or the GPU 106 (for example in the form of processed pixels), the rendered image data being representative of an image to be displayed on the display 114. The display interface 112 is arranged to retrieve the rendered image data from the frame buffer and cause the display 114 to display the image represented by the rendered image data. The display 114 may be any device suitable for displaying the image represented by the rendered image data. The display 114 may be, for example, a liquid crystal display (LCD), a plasma display panel, or any other suitable display device.

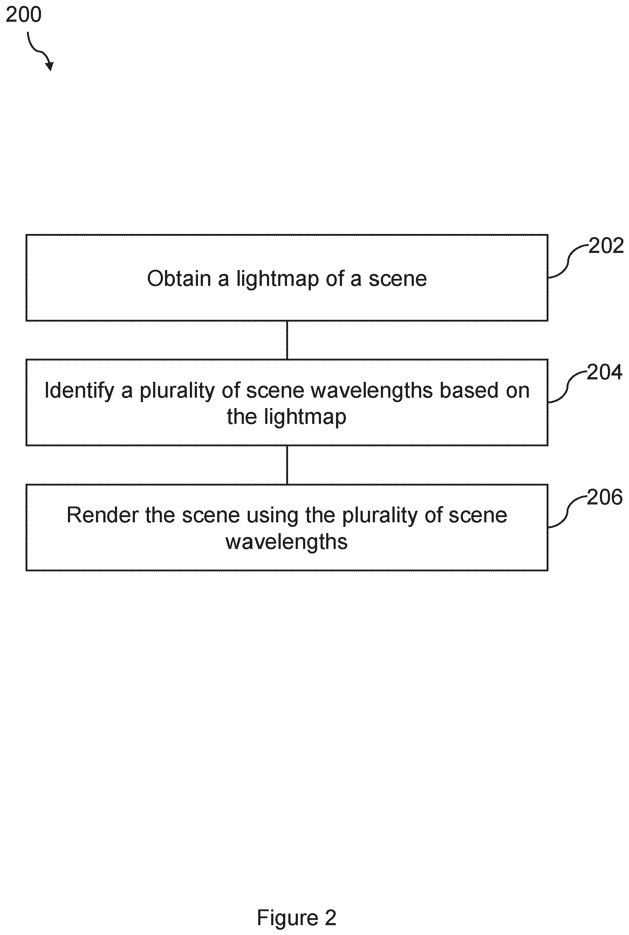

Figure 2 illustrates a method flow diagram of a method according to the present invention. More particularly, Figure 2 illustrates a computer implemented method 200 for rendering graphics data of a 3D scene on the video gaming system 100. One or more steps of the method 200 are implemented by the GPU 106.

Step 202 of the method 200 comprises obtaining lightmap data of the scene. For example, the GPU 106 obtains the lightmap data from the graphics datastore 108 and stores the lightmap data in the GPU memory for one or more further processing steps.

Step 204 comprises identifying a plurality of scene wavelengths based on the lightmap data. The scene wavelengths are wavelengths that meet a threshold contribution to the scene. Step 204 typically occurs prior to runtime.

The threshold contribution is an interaction threshold. In particular, the interaction threshold represents a minimum amount of interaction that a wavelength has on the generation of the lightmap data. For example, a scene with a significant number of red objects and a minimal number of blue objects may comprise scene wavelengths that are within a blue wavelength range (for example, 450 to 500 nm). Rays in the red wavelength range (for example, 625 to 750 nm) may not meet the interaction threshold and are thus not identified as scene wavelengths.

The scene wavelengths are identified by applying a Fourier transform to the light map. The Fourier transform provides frequencies present in the scene (i.e., frequencies corresponding to wavelengths that make at least a threshold contribution). The frequencies are used to determine the wavelengths present in the scene. Since the lightmap data includes lightmap pixel data representing spectral data comprising intensities at various wavelengths or frequencies, applying a Fourier transform decomposes the lightmap pixel data into its constituent frequencies. A predetermined filter can be applied to these constituent frequencies. The predetermined filter can be an intensity filter, such that frequencies that meet the intensity threshold are identified as scene wavelengths.

Step 206 comprises rendering the scene using the plurality of scene wavelengths. Therefore, in step 206, the scene is rendered using the plurality of scene wavelengths, and non-scene wavelengths are not used to render the scene. Step 206 occurs during runtime.

Rendering the scene comprises performing ray tracing using the plurality of scene wavelengths. In more detail, to render the scene using the plurality of scene wavelengths, the CPU 102 loads the lightmap data and the 3D geometry (i.e., object shapes, positions, and materials) of the scene to the GPU memory. The CPU 102 instructs the GPU 106 to generate rays from the camera point of view for each pixel. For each pixel in parallel, a ray is generated for each scene wavelength (i.e., rays for non-scene wavelengths are not generated). Alternatively, each ray may comprise a multiplexed subset of scene wavelengths. The GPU 106 determines which rays intersect with the scene geometry, and determines which points are intersected. The GPU 106 uses data stored in the lightmap data to determine spectral radiance values for the intersection points, for example using a memory access operation. The spectral radiance values describe how the object material interacts with the wavelengths of the intersecting ray. The GPU 106 determines a direction and intensity of reflected and refracted rays (primary and secondary rays) based on the spectral radiance values. The GPU 106 simulates the path of the reflected and refracted rays until they reach a light source. The GPU 106 integrates contributions from all scene wavelengths and generates colour values for each pixel in a final image. The GPU 106 stores the pixel colour values in the frame buffer 110 and subsequently transfers the frame buffer data to the display 114 such that the display 114 shows the scene.

The method 200 can further comprise modifying the lightmap data based on the plurality of scene wavelengths. This is typically performed after identifying 204 the plurality of scene wavelengths and prior to rendering 206 the scene, such that modification occurs prior to runtime. Modifying the lightmap data comprises removing data corresponding to wavelengths that do not meet the threshold contribution to the scene. This can be achieved by applying a filter to the constituent frequencies after a Fourier transform is applied to the spectral data. This filter may be an intensity filter, such that frequencies that do not meet the intensity filter are removed from the lightmap data. More particularly, the CPU 102 removes data from the lightmap data that describes how light of wavelengths that do not meet the threshold contribution. For example, in a scene with no blue objects, the CPU 102 removes data associated with blue wavelengths from the lightmap data.

In an example implementation of the method 200, method 200 is for rendering graphics data of a 3D scene on the video gaming system 100, wherein the 3D scene comprises at least one red object and at least one blue object. At step 202, the GPU 106 obtains the lightmap data associated with the scene from the graphics datastore 108 and stores the lightmap data in the GPU memory. At step 204, the GPU 106 applies a Fourier transform to the lightmap data to identify the plurality of scene wavelengths. Since the scene comprises red and blues objects, the GPU 106 identifies scene wavelengths within these wavelength bands. The GPU 106 removes data from the lightmap data corresponding to wavelengths that do not meet the threshold contribution to the scene, i.e., green wavelengths between 500 and 570 nm. The GPU 106 stores the modified lightmap in the GPU memory. At step 206, the GPU 106 renders the scene using the plurality of scene wavelengths. It will be appreciated that this example implementation is by way of example only.

## Claims

1. A computer implemented method for rendering graphics data of a 3D scene on a video gaming system comprising a GPU, the method comprising:
obtaining lightmap data of the scene;
identifying a plurality of scene wavelengths based on the lightmap data, wherein the plurality of scene wavelengths are wavelengths that meet a threshold contribution to the scene; and
rendering the scene using the plurality of scene wavelengths.

2. The computer implemented method of claim 1 wherein identifying the plurality of scene wavelengths comprises:
applying a Fourier transform to the lightmap data to obtain a plurality of frequencies; and
determining the plurality of wavelengths based on the plurality of frequencies.

3. The computer implemented method of claim 1 or claim 2, wherein rendering the scene using the plurality of scene wavelengths comprises:
performing ray tracing using the plurality of scene wavelengths.

4. The computer implemented method of claim 3, wherein performing ray tracing using the plurality of scene wavelengths comprises:
wavelength multiplexing the plurality of scene wavelengths.

5. The computer implemented method of any preceding claim, wherein the lightmap data comprises spectral interaction data; and
identifying the plurality of scene wavelengths is based on the spectral interaction data.

6. The computer implemented method of any preceding claim, wherein the threshold contribution is an interaction threshold.

7. The computer implemented method of claim 6, wherein the interaction threshold is quantified as a number of reflections that a wavelength experiences when intersecting different object surfaces of the scene.

8. The computer implemented method of claim 7, wherein the number of reflections is at least one reflection.

9. The computer implemented method of claim 6, wherein the interaction threshold is quantified as an intensity threshold.

10. The computer implemented method of any preceding claim, further comprising modifying the lightmap data based on the plurality of scene wavelengths; and optionally wherein modifying the lightmap data comprises removing data corresponding to wavelengths that do not meet the threshold contribution to the scene.

11. The computer implemented method of any preceding claim, wherein the lightmap data is obtained prior to runtime.

12. The computer implemented method of any preceding claim, wherein the plurality of scene wavelengths are identified prior to runtime; or wherein the plurality of scene wavelengths are identified at runtime.

13. A non-transitory storage medium comprising instructions that when executed by a processor cause the processor to perform the method of any preceding claim.

14. A computer program comprising instructions that when executed by a processor cause the processor to perform the method of any of claims 1 to 12.

15. A video game system for rendering graphics data of a 3D scene, the system comprising a processor and a GPU and being configured to:
obtain lightmap data of the scene;
identify a plurality of scene wavelengths based on the lightmap data, wherein the plurality of scene wavelengths are wavelengths that meet a threshold contribution to the scene; and
render the scene using the plurality of scene wavelengths.
